# DEMANDE DE BREVET EUROPEEN

(11) **EP 2 053 137 A1**
(43) Date de publication de la demande: **29.04.2009**
(21) Numéro de dépôt: 07118915.3
(22) Date de dépôt: 19.10.2007
(51) Int. Cl.: C22B 7/04

(54) **Valorisation de résidus contenant du cuivre et d'autres métaux de valeur**

(71) Demandeur: PAUL WURTH S.A., 1122 Luxembourg (LU)
(72) Inventeur: Roth, Jean-Luc, 57100 Thionville (FR); Solver, Christophe, 1450 Luxembourg (LI)
(74) Mandataire: Kihn, Henri

(57) **Abrégé**

Procédé de récupération de métaux non-ferreux, notamment de cuivre, de nickel et de cobalt, à partir de résidus métallurgiques contenant ces métaux non-ferreux à un niveau d'oxydation supérieur ou égal à zéro, dans un four électrique à arc libre de type courant alternatif comprenant plusieurs électrodes, contenant un pied de bain de cuivre liquide, surmonté d'un laitier fluide comprenant au moins une phase de fusion-réduction, comprenant le chargement de résidus métallurgiques comprenant des métaux non-ferreux sur le pied de bain contenu dans le four électrique à arc libre, la fusion des résidus métallurgiques dans le laitier fluide ou à l'interface laitier-bain de cuivre, la réduction au moins des métaux non-ferreux au niveau d'oxydation zéro, et le brassage intense du pied de bain de cuivre par injection de gaz inerte, de préférence de l'azote et/ou de l'argon, de manière à éviter la formation de croûtes et à accélérer la réaction de réduction et à faire passer les métaux non-ferreux miscibles au cuivre dans le pied de bain de cuivre.

## Description

### Domaine technique

La présente invention concerne un procédé de valorisation de résidus contenant du cuivre et d'autres métaux de valeur, en particulier du nickel, du molybdène, du cobalt, etc.

### Etat de la technique

L'augmentation du prix du cuivre (Cu) et de la valeur des métaux d'alliage comme notamment le nickel (Ni), le cobalt (Co) et le molybdène (Mo) a conduit les « smelters » de cuivre à développer des étapes complémentaires de traitement des scories avant leur mise en décharge.

En effet, les procédés d'élaboration du Cu à partir de concentrés de minerais donnent lieu généralement à des mattes de cuivre, d'une part, qui sont affinées, et d'autre part à des laitiers (ou scories) rassemblant la gangue, composées principalement de silice, d'oxyde de fer, et d'autres oxydes dits non réductibles (alumine, magnésie, chaux). Ces scories contiennent des teneurs faibles de cuivre et d'autres métaux réductibles - comme le molybdène, le nickel, le cobalt, etc. - qui jusqu'ici ne sont que partiellement récupérées, soit par une méthode physique, à savoir broyage très fin de la scorie et séparation par flottation des phases contenant le cuivre, soit par un traitement de réduction du laitier dans un four électrique.

En pratique, les unités d'élaboration du cuivre ont toujours laissé et déposé une fraction pauvre contenant encore 0,5 à 2 % de cuivre, et des teneurs de l'ordre de 0,5 % de Mo, Ni ou Co, variables en fonction de la nature minéralogique du concentré.

Une analyse typique de scories provenant de smelters est présentée dans le Tableau 1 ci-après :

**Tableau 1 : Laitier de smelter Cu**

| Elément / composé | unité | teneur |
|---|---|---|
| Cu total | % | 0,7∼1,6 |
| Fe | % | 44∼47 |
| Mo | % | 0-0,6 |
| Zn | % | 1∼5 |
| S | % | 0,2∼0,8 |
| SiO₂ | % | 24∼29 |
| Fe₃O₄ | % | 4∼11 |
| CaO | % | 1∼2 |
| Al₂O₃ | % | 2∼3 |

Des scories de composition comparable (contenant également du Cu) sont obtenues dans la métallurgie du plomb, après les étapes d'extraction par volatilisation (« fuming ») des métaux volatils, principalement Pb et Zn.

La composition de ces scories est résumée dans le Tableau 2 ci-après :

**Tableau 2 : Laitier de « fuming » Pb**

| Elément / composé | unité | teneur |
|---|---|---|
| Cu total | % | 1∼2 |
| Fe (forme FeO) | % | 20∼35 |
| SiO₂ | % | 30∼40 |
| CaO | % | 15∼20 |
| Al₂O₃ | % | 3∼7 |
| Zn | % | 0∼1 |
| Pb | % | <0,1 |

Par ailleurs, l'élaboration de cuivre par voie électrochimique (fours à anodes) donne lieu à des scories dites scories cuivre-fer, de composition (indicative) suivante (Tableau 3) :

**Tableau 3 : Scorie Cu-Fe**

| Elément / composé | unité | teneur |
|---|---|---|
| Cu total | % | 5∼10 |
| Fe | % | 25∼35 |
| Sn | % | 1∼2 |
| Ni | % | 0∼1 |
| Cr | % | 0∼3 |
| S | % | 0,1∼0,2 |
| SiO₂ | % | 10∼30 |
| CaO | % | 5∼15 |
| Al₂O₃ | % | 2∼6 |
| MgO | % | 2∼4 |
| Zn | % | 0∼10 |
| Pb | % | 0∼2 |

Dans les procédés de valorisation connus, l'étape de récupération est réalisée dans un four de traitement ou d'épuration (« slag cleaning ») - dont la version la plus récente est un four électrique de type four SAF (« Submerged Arc Furnace »), où en fait le chauffage ne se fait pas par arc électrique, mais conduction du courant (effet Joule) dans le laitier - ce pourquoi ce four est parfois appelé « à résistance de laitier » (slag resistance).

Ce type de four est décrit dans sa technologie et son fonctionnement dans l'article « Current status and new trends in copper slag cleaning » de l'ouvrage « COPPER 2003 - COBRE 2003 ».

Dans la pratique industrielle, ces fours traitent plusieurs types de coproduits de la filière d'élaboration, mais principalement des laitiers de convertisseur, liquides et contenant 5 à 10 % Cu (principalement sous forme d'oxyde Cu₂O et de sulfure Cu₂S), et, en faible proportion des « scraps de cuivre » froids, donc solides, contenant 30 à 40 % Cu. Les autres composés prépondérants sont le fer (sous forme d'oxydes FeO et Fe₃O₄) et la silice SiO₂.

L'opération s'effectue à une température de l'ordre de 1250 °C, et elle consiste en une réduction des oxydes de Cu par du gaz CO ou du fer métallique, eux-mêmes formés à partir d'un ajout de carbone dans le laitier.

Les produits obtenus sont une matte Cu-Fe-S contenant 50 à 70 % de cuivre, et donc une proportion importante de fer, et un laitier résiduel de composition donnée précédemment (« scorie smelter Cu »).

Ce résultat est insatisfaisant pour 2 raisons :
- d'une part, la matte de cuivre est fortement diluée par du fer et du soufre, et
- d'autre part le laitier final contient encore des teneurs notables en Cu, Mo et Zn, qui ne seront donc pas valorisés.

Une publication de MINTEK, intitulée « Recovery of cobalt, nickel, and copper from slags, using DC-arc furnace technology », présente des résultats d'essais effectués sur différents fours pilotes à arc alimentés en courant continu (60 kW, 150 kW, 1∼3 MW), de fusion de laitiers de four à réverbère contenant 1 à 3 % Cu, 0 à 4 % Ni, 0 à 1 % Co.

Les essais étaient réalisés à des températures comprises entre 1300 et 1600 °C et la réduction était effectuée à partir de carbone comme agent réducteur primaire.

Les alliages obtenus comportaient de 40 % à 80 % Fe, et les enseignements principaux des essais étaient les suivants :
- le cobalt et le cuivre sont plus difficiles à récupérer que le nickel,
- les rendements de récupération de Cu et Co sont fonction principalement de la proportion de fer dans le métal coulé, et de la durée de l'opération - des durées de l'ordre de 2 h permettant de minimiser les teneurs résiduelles de Cu, Ni et Co dans le laitier, et
- pour des teneurs en fer de 50 % dans le métal, les teneurs résiduelles observées sont de l'ordre de 0,5 % Cu, et de 0,1 % pour Ni et Co ; ceci en partant de teneurs initiales 5 à 10 fois plus élevées pour Ni et Cu, ce qui confirme que Ni est récupéré avec le meilleur rendement.

L'étude cite par ailleurs
- la possibilité de concentrer l'alliage en Cu et Co, par injection d'oxygène, permettant d'abaisser la teneur en Fe à 25 %, et
- la possibilité d'améliorer les rendements de récupération des éléments de valeur par l'application d'un faible brassage (« mild stirring ») - sans le chiffrer.

Les auteurs expliquent que le chauffage par arc libre permet d'obtenir des rendements de récupération meilleurs que dans un four à « résistance de laitier » (présenté précédemment), parce que la composition chimique du laitier peut être ajustée de manière indépendante de la caractéristique de résistance du laitier (qui exige des teneurs élevées en Fe) ; mais la comparaison se limite à l'alternative four électrique AC (courant alternatif) mode SAF par rapport au four à arc libre type DC.

Enfin ils mentionnent des publications antérieures ayant démontré que l'addition de chaux (CaO) accélère la cinétique de réduction, et permet d'obtenir de bons rendements de récupération après déjà 1 h d'opération.

MINTEK a déposé en 1994 un brevet basé sur ce principe de réduction par du carbone dans un four à arc DC (courant continu).

A noter que des brevets anciens (1972 à 1988) proposent des procédés de réduction des laitiers de « smelter » Cu en four électrique, dans des conditions très particulières :
- brevet 1972 (DE 2122169, Vereinigte Deutsche Metallwerke), utilisant des fines de CaSi, et dans des conditions très spéciales de température (>1700 °C),
- brevet 1976 (GB 1458269, Kennecott Copper) utilisant comme réducteur du sulfure de fer à 1200∼1300 °C, ou un réducteur carboné, introduits avec un brassage mécanique intense, afin de former finalement une matte, et
- brevet 1988 (US 4737186, Outokumpu) de réduction d'un laitier de Pb, Cu et/ou Ni par de la poussière de carbone, mais sur un bain métal très mince (épaisseur inférieure à 20 mm), ce qui implique le mode de fonctionnement du type SAF (laitier résistif).

Par conséquent, aucune des solutions proposées jusqu'ici ne permettent de récupérer les métaux de valeur de manière satisfaisante, tant au niveau de la nature des matières premières utilisables et des rendements des métaux récupérés, qu'au niveau des aspects techniques et économiques du procédé lui-même.

### Objet de l'invention

L'objet du présent brevet est de proposer un procédé efficace permettant de traiter ces différentes scories afin d'en extraire au moins certains des métaux de valeur contenus, par exemple Cu, Ni, Mo, Co, Zn, Pb, sous des formes très valorisables.

Conformément à l'invention, cet objectif est atteint par un procédé de récupération de métaux de valeur non-ferreux selon la revendication 1.

### Description générale de l'invention

Afin d'atteindre l'objectif mentionné ci-dessus, la présente invention propose par conséquent un procédé de récupération de métaux non-ferreux, notamment de cuivre, de nickel et de cobalt, à partir de résidus métallurgiques contenant ces métaux non-ferreux à un niveau d'oxydation supérieur ou égal à zéro, dans un four électrique à arc libre de type courant alternatif comprenant plusieurs électrodes, équipé d'une sole réfractaire et contenant un pied de bain de cuivre liquide, surmonté d'un laitier fluide comprenant au moins une phase de fusion-réduction A, comprenant les éléments suivants :

| | |
|---|---|
| A1 | chargement de résidus métallurgiques comprenant des métaux non-ferreux sur le pied de bain contenu dans le four électrique à arc libre, |
| A2 | fusion des résidus métallurgiques dans le laitier fluide ou à l'interface laitier-bain de cuivre, |
| A3 | réduction au moins des métaux non-ferreux au niveau d'oxydation zéro (sous forme métal), et |
| A4 | brassage intense du pied de bain de cuivre par injection de gaz inerte, de préférence de l'azote et/ou de l'argon, de manière à éviter la formation de croûtes , à accélérer la réaction de réduction et à faire passer les métaux non-ferreux miscibles au cuivre dans le pied de bain de cuivre. |

L'utilisation d'un bain de cuivre en combinaison avec un four à arc libre de type courant alternatif est particulièrement avantageuse pour plusieurs raisons.

D'abord, ce procédé de récupération permet de recourir à une combinaison d'équipements standards (four électrique, dispositif de chargement, dispositif de brassage du bain) qui sont utilisés dans le présent cas dans des conditions de fonctionnement spécifiques.

Ensuite, cette combinaison permet d'utiliser des résidus métallurgiques qui sont le plus souvent des laitiers, des scories, des poussières provenant de procédés métallurgiques de tout type, obtenus tant pendant l'élaboration que pendant l'affinage, mais pouvant provenir de toute autre source appropriée, p. ex. pendant la transformation ou l'usinage de métaux et d'alliages, et qui peuvent comprendre un grand nombre de métaux non-ferreux de valeur différents, comme p. ex. Ni, Co, Mo, Zn, Pb, As, Al, etc., même à des teneurs relativement faibles au départ.

D'autre part, contrairement aux procédés à résistance de laitier, le présent procédé est essentiellement insensible à la composition des résidus métallurgiques utilisés qui vont déterminer la composition du laitier. Ceci permet une très grande flexibilité du traitement au niveau de l'origine et de la nature des résidus métallurgiques. En particulier, la présence d'autres composés non intéressants du point de vue valorisation, comme p. ex. le silicium, le magnésium, le calcium, etc. n'affecte pas négativement le fonctionnement du présent procédé.

Il est à noter que les résidus métallurgiques utilisables dans un tel procédé peuvent être froids, donc solides, mais le chargement peut également être effectué avec des résidus chauds ou même déjà fondus provenant p. ex. directement d'un procédé métallurgique, comme dans le cas des smelters Cu.

Dans une forme de réalisation préférée du procédé, la réduction est réalisée en présence de chaux (oxyde de calcium, CaO). En effet, la chaux accélère la cinétique des réactions de réduction et permet d'obtenir de bons rendements de récupération après des temps de traitement plus courts.

Le chargement des résidus métallurgiques et facultativement de la chaux dans le four électrique se font, de préférence, entre les électrodes du four électrique à arc libre. Alternativement, le chargement des résidus métallurgiques et de la chaux se font depuis un orifice dans la voûte du four à arc. Cet orifice muni d'une chute, est alors situé près du périmètre du cercle des électrodes, avec une inclinaison de la chute telle que la matière, lors de sa descente, pénètre entre les électrodes dans le pied de bain.

Le chargement des résidus métallurgiques et de la chaux dans le four électrique se font de préférence de manière simultanée ou alternée, de préférence par gravité.

Si on le souhaite, on peut évidemment ajouter en outre des agents de formation de laitier supplémentaires pendant la phase A et/ou C.

Le brassage intense du pied de bain permet d'homogénéiser en température le pied de bain et le laitier ; de renouveler en permanence la couche de laitier en contact avec le pied de bain afin qu'elle reste surchauffée et bien liquide, et capable d'absorber les métaux de valeur non-ferreux, sans que ceux-ci ne se solidifient et forment alors une croûte infranchissable. En effet, au moment de l'impact des résidus sur le laitier, ceux-ci sont directement digérés par le milieu du four et fondent très rapidement grâce au brassage énergique.

Ce brassage intense du pied de bain peut s'effectuer par injection de gaz neutre ou inerte (azote et/ou argon) à travers la sole du four électrique à arc à des débits de gaz de préférence compris entre 40 l/min.t (litres par minute et par tonne de métal liquide du bain) et 150 l/min.t (litres par minute et par tonne de métal liquide du bain). De manière particulièrement préférée, le débit de gaz de brassage se situe entre 50 et 100 l/min.t (litres par minute et par tonne de métal liquide du bain). Bien entendu, ces débits sont à ajuster en fonction de la hauteur du pied de bain ainsi que du nombre et de la position de points d'injection. Ces débits élevés de gaz de brassage sont sans rapport avec la pratique courante au four électrique à arc. En effet, le débit de gaz de brassage dans les procédés classiques de production d'acier dans un four électrique à arc se situe dans la gamme de 0,1 à 5 l/min.t et est destiné uniquement à homogénéiser le pied de bain et à régulariser les résultats métallurgiques et la température.

Pour garantir l'efficacité optimale du brassage, le pied de bain métallique doit avoir une certaine hauteur minimale, de préférence une hauteur d'au moins 0,3 m. Il faut veiller à éviter que l'injection du gaz de brassage par la sole du four ne fasse simplement un "trou" au travers du bain de métal, sans le mettre en mouvement énergiquement. Bien entendu, cette hauteur minimale peut varier en fonction de la configuration du four à arc électrique et de l'emplacement des moyens d'injection de gaz qui sont de préférence des briques poreuses ou bien des tuyères.

De manière à garantir une réduction complète des métaux de valeur même en présence de réducteurs métalliques dans les résidus métallurgiques, la réduction est de préférence réalisée en présence de carbone, de préférence d'anthracite. A cet effet, on effectue des injections de carbone dans le bain de cuivre afin de garantir dans le bain une teneur en carbone suffisante.

Un autre avantage du procédé selon l'invention est que certains composés non-ferreux sont volatilisés pendant la phase A et entrainés par les fumées. Par conséquent dans une forme de réalisation avantageuse de l'invention, le procédé prévoit en outre la récupération de métaux lourds volatils, en particulier le zinc et le plomb, dans lequel les composés de métaux lourds volatils entraînés dans les fumées pendant la phase A et, le cas échéant la phase B, sont récupérés au moyen de séparateurs, par exemple au moyen d'un filtre.

De manière à optimiser l'extraction des gouttelettes de métal du laitier dans le bain de cuivre, une forme de réalisation envisage une phase de décantation B subséquente à la au moins une phase fusion-réduction, comprenant un brassage modéré B1 favorisant la décantation des gouttelettes métalliques du laitier dans le pied de bain.

Ce brassage modéré du pied de bain à l'étape B1 est réalisé par injection de gaz neutre à travers la sole du four électrique à arc à un débit compris entre 2 l/min.t et 20 l/min.t et de manière préférée à un débit entre 3 et 10 l/min.t.

Comme la phase A et facultativement la phase B peuvent être réitérées et que le volume utile du four est limité, il est avantageux de retirer du four une partie, de préférence une grande partie du laitier épuisé en métaux de valeur de manière à pouvoir introduire une nouvelle charge de résidus métallurgiques. Afin d'éviter que des gouttelettes de métal en suspension dans le laitier ne soient éliminées avec le laitier, le procédé prévoit de préférence qu'un retrait d'au moins une partie du laitier du four est précédé d'une phase de décantation moyennant un brassage modéré.

Le bain de cuivre est particulièrement avantageux pour la récupération d'un certain nombre de métaux non-ferreux après réduction au niveau d'oxydation zéro, c'est-à-dire sous forme métal, comme notamment le nickel et le cobalt, mais également d'autres métaux, comme le molybdène. Si l'on souhaite obtenir un bon rendement de récupération de ces métaux non-ferreux, il est cependant difficile d'éviter de réduire une certaine quantité de fer qui va dès lors également passer dans le bain de cuivre.

Cependant comme en général la présence de fer dans le bain de cuivre n'est pas souhaitée, une forme de réalisation avantageuse propose en outre l'élimination du bain de cuivre du fer et de métaux plus oxydables que le fer éventuellement présents, lequel procédé comprend en outre au moins une phase d'oxydation C subséquente comprenant l'oxydation du fer et des métaux plus oxydables que le fer dans le bain de cuivre, notamment le silicium, le manganèse ou l'aluminium, par injection d'oxygène dans le bain de cuivre, en appliquant ou en maintenant un brassage intense par le fond.

L'avantage particulier de cette forme de réalisation est par conséquent non seulement de purifier le bain de cuivre afin d'obtenir un cuivre essentiellement exempt de fer, mais contenant en outre notamment du nickel et du cobalt. Un tel alliage de cuivre peut être une matière première intéressante pour certaines applications du cuivre.

En cas de présence de molybdène dans les résidus métallurgiques utilisés, vu que celui-ci est moins miscible au cuivre que le nickel ou le cobalt par exemple, la présente invention propose une variante particulièrement avantageuse du procédé permettant de récupérer sélectivement un concentré d'oxyde de molybdène. Dans un tel cas, la phase d'oxydation C est réalisée après un retrait B2 d'au moins une partie du laitier et avec une quantité d'oxygène représentant 1,2 à 1,8 fois la quantité stoechiométrique d'oxydation du fer et du molybdène contenu dans le bain de cuivre, et l'oxyde de molybdène entraîné dans les fumées est récupéré au moyen de séparateurs, par exemple au moyen d'un filtre. Ce séparateur est de préférence distinct de celui utilisé éventuellement au cours de la phase A pour la récupération du Zn et du Pb. L'oxyde de molybdène obtenu est relativement concentré et est aisément purifiable davantage par des moyens connus si nécessaire.

Comme, pendant la phase d'oxydation avec un excès d'oxydant, inévitablement une partie du cuivre est oxydé et entraîné dans le laitier, il est avantageux de retirer une partie du laitier appauvri avant la phase C et de recycler le laitier enrichi en cuivre dans une phase de fusion-réduction A subséquente.

Par conséquent, une partie du bain de cuivre est avantageusement retirée du four au terme de la phase C, alors que le laitier est recyclé dans une phase de fusion-réduction A subséquente.

D'autre part, vu la miscibilité plus réduite du molybdène dans le cuivre, il peut être avantageux d'effectuer la phase d'oxydation C plus fréquemment en fonction de la teneur de Mo dans les résidus métallurgiques de départ, par exemple après chaque phase A de préférence combinée à une phase B.

Les températures les températures de traitement utilisées lors de la phase A, de la phase B et de la phase C se situent en général entre 1300 et 1600 °C, mais de préférence entre 1400 et 1500 °C.

En résumé, grâce à un procédé tel que décrit ci-dessus, il est possible de valoriser des résidus métallurgiques d'origine diverse contenant des métaux non-ferreux. Dans sa forme la plus simple un tel procédé permet d'obtenir un alliage métallique du Cu contenant du Ni et du Co, et le cas échéant du Mo avec une faible teneur en fer. Avantageusement dans ce cas, on récupère sous forme de poussières dans un filtre les fractions métalliques volatiles, notamment Zn, Pb, As, Bi, Sb, etc., ainsi que les métaux précieux éventuellement présents (p. ex. Ag, In, Ge, ...).

Avantageusement, le procédé comprend une phase de décantation moyennant un brassage modéré du bain de cuivre afin de permettre la récupération de gouttelettes de métal dans le bain.

Dans un procédé davantage préféré, une phase d'oxydation permet non seulement d'éliminer le fer de l'alliage du cuivre, mais également la récupération du molybdène par filtration des fumées.

D'autres particularités et caractéristiques de l'invention ressortiront de la description détaillée de quelques modes de réalisation avantageux présentés ci-dessous, à titre d'illustration.

### Description de modes de réalisation préférés

En principe, la solution proposée consiste en un procédé pyro-métallurgique réalisé dans un four à arc libre du type AC (courant alternatif), sur un bain de cuivre fortement brassé par injection de gaz neutre (azote ou argon).

A. Phase de fusion-réduction
- le chargement du laitier (et des autres résidus éventuels) à traiter et mise en température (fusion si chargement froid) par chauffage et brassage intensif au contact du bain de cuivre ;
- une étape réductrice permettant de faire passer dans le métal la quasitotalité des éléments Cu, Mo, Ni, et Co du laitier; à la fin de cette étape réductrice, on coule un laitier très pauvre en éléments de valeur, d'où de très bons rendements Cu, Ni, Co - de même que Mo s'il est présent en faible proportion.

B. Phase de décantation
- de manière avantageuse, la phase A est suivie d'une période de décantation afin de permettre aux gouttelettes de métal de rejoindre le bain de cuivre en appliquant un brassage plus modéré que pendant la phase A,

C. Phase d'oxydation
- une phase oxydante permettant d'éliminer le fer présent dans l'alliage Cu - Ni (ou Co) ; à la fin de cette phase oxydante, on coule une partie du bain métallique ainsi purifié du fer, mais on garde un pied de bain suffisant pour commencer le traitement d'une nouvelle charge de laitier

Ces 3 phases sont réalisées avec des niveaux de température d'environ 1400 à 1500 °C et des niveaux de brassage pneumatique intense pour les phases A et C (40 à 150 litres d'azote par minute et par tonne de bain métal), ce qui permet de réaliser les échanges thermiques et les réactions en des temps courts, de l'ordre de 10 à 20 minutes par phase.

La succession d'une phase réductrice et oxydante permet de récupérer le cuivre, le nickel et le cobalt dans un bain de cuivre très pauvre en fer et de volatiliser et récupérer les autres métaux de valeur soit indirectement sous forme de fines particules d'oxydes par oxydation des vapeurs métalliques réduites, p. ex. le Zn et le Pb, de la phase A, soit directement sous forme de particules d'oxydes, p. ex. le As, le Mo, etc. à la phase C, au moyen d'un filtre ou d'un autre séparateur, comme un cyclone, etc.

### Exemples

### Exemple 1

Une première variante d'un procédé selon l'invention est illustrée dans l'essai décrit ci-après, réalisée pour traiter une scorie Cu-Fe-Ni, chargée froide. On comprendra que le traitement d'une scorie de smelter Cu se fera dans des conditions et avec des résultats similaires.

L'essai est réalisé sur un four électrique à arc AC de 3 MW de puissance active, et de capacité totale 10 t, et il consiste à traiter la scorie froide, donc solide, de composition suivante :

| Elément / composé | unité | teneur |
|---|---|---|
| Cu (sous forme Cu₂O) | % | 8 |
| Fe (sous forme FeO) | % | 35 |
| Ni (sous forme NiO) | % | 0,8 |
| S | % | 0.1 |
| SiO₂ | % | 31 |
| CaO | % | 5 |
| Al₂O₃ | % | 4 |
| MgO | % | 3 |
| ZnO | % | 1,2 |

Avant de démarrer le traitement proprement dit, on charge dans le four 3 t de cuivre de récupération, dont l'analyse est donnée dans le tableau qui suit :

| Elément / composé | unité | teneur |
|---|---|---|
| Cu | % | 97,7 |
| Fe | % | ∼1 |
| Ni | % | 0,1 |
| S | % | 0.1 |
| Si | % | 0.5 |
| Zn | % | <0,1 |
| Mn | % | 0,5 |

La charge de cuivre est fondue et portée à 1450 °C, sous brassage azote par 3 éléments de brassage disposés en fond de sole, alimentés par un débit total de 150 I/min, soit 9 Nm³/h.

Après avoir atteint la température de 1450 °C, on commence le chargement de la scorie Cu-Fe-Ni, par un orifice en voûte du four, à raison d'un débit continu de 4 t/h, alors que le brassage est maintenu à 150 I/min.

On charge ainsi 5 t de scorie, et en fin de chargement, on ajoute 500 kg de chaux libre CaO.

Une heure et demie après le début du chargement de la scorie, on obtient ainsi un laitier homogène, et on peut commencer la phase de réduction. Celle-ci est effectuée par injection d'anthracite fin par une lance immergée dans le laitier, à raison de 10 kg/min, pendant 10 minutes.

Dix minutes après la fin de cette injection, on abaisse le débit de brassage d'azote à ∼15 l/min pendant 10 minutes, pour favoriser la décantation des gouttes de métal du laitier.

A ce stade, on prend des échantillons de métal et de laitier ; leur analyse donne les résultats suivants :

| Teneur métal % | Elément / composé | Teneur laitier % |
|---|---|---|
| 96,7 | Cu | 0,3 |
| 1,9 | Fe (métal) / FeO (laitier) | 45 |
| 1,2 | Ni | 0,05 |
| 0,1 | S | ∼0.1 |
| <0,02 | Si (métal) / SiO₂ (laitier) | 32 |
| | CaO | 15 |
| | Al₂O₃ | 4 |
| | MgO | 3 |
| <0,01 | Zn (métal) / ZnO (laitier) | <0,1 |
| <0,02 | Mn (métal) / MnO (laitier) | 0,4 |

La quantité de laitier obtenue est de 4,80 t ; elle est calculée en effectuant un bilan sur la chaux, présente en grande quantité, et mesurable avec précision.

On déduit de cette analyse les rendements de récupération suivants :
- Cu : 96 %
- Ni : 94 %

Le bain de métal est estimé à 3,48 t.

On constate que Si et Mn ont quasiment disparu du bain métal, ce qui signifie qu'ils ont participé à la réduction de Cu et Ni (et du Fe passé dans le métal).

Ceci montre que la réduction pourrait aussi se faire exclusivement par des réducteurs métalliques, du type Mn, Si ou Al. Ces réducteurs métalliques présentent 'avantage d'un rendement proche de 100 %, car contrairement au carbone, ils sont aisément dissous dans le bain de cuivre, et donc naturellement répartis sur toute la surface du bain ; par ailleurs la réaction de réduction ne forme pas de gaz CO, ce qui évite le risque d'un débordement de laitier par moussage incontrôlé. En revanche, les réducteurs métalliques sont beaucoup plus chers que le carbone.

On décrasse ensuite ce laitier très pauvre en Cu et en Ni, et on reprend le processus avec une phase de fusion de scorie, et une phase de réduction, effectuées de manière similaire à la séquence décrite ; on aboutit à un bain métal qui s'enrichit de ∼1,1 % Ni, et on peut reprendre la séquence autant de fois que la capacité du four le permet, par exemple 3 fois (4 séquences effectuées au total), pour atteindre 5 t de métal.

Après avoir décrassé le laitier, mais en en gardant au four une faible proportion (p.ex. 500 kg) on peut avant de couler le métal, passer à une phase oxydante C, pour éliminer les 2 % Fe contenus dans le bain de métal.

A cet effet, on se remet en brassage intense (150 I/min) et on injecte environ 1,2 fois la quantité d'oxygène stoechiométrique d'oxygène, par une lance immergée dans le bain de métal. L'analyse du métal montre qu'on a abaissé ainsi la teneur en Fe à moins de 0,05 %, mais on observe que la teneur en Cu du laitier a augmenté à 6 %.

On procède donc à une coulée sélective d'une partie du métal, p. ex. de 2 t d'alliage Cu-Ni, par un dispositif de chenal fonctionnant en siphon, ce qui permet de garder au four le laitier riche en cuivre.

On peut alors reprendre une séquence de fusion-réduction de scorie (phase A), en partant sur le pied de bain restant ; le cuivre contenu dans ce laitier sera récupéré au cours de la phase de réduction.

Ceci définit donc un procédé de traitement d'une scorie Cu-Fe-Ni, produisant un alliage Cu-Ni très pur (exempt de fer), et récupérant le cuivre et le nickel avec des rendements proches de 95 %.

### Exemple 2

Le mode de fonctionnement sur bain de cuivre ci-dessus peut s'appliquer pour récupérer le nickel et le cobalt, bien miscibles au cuivre. Dans le cas d'une scorie Cu-Mo, le molybdène étant très peu miscible au cuivre, on propose une variante du traitement avec séparation du Mo par oxydation et volatilisation, l'oxydation étant effectuée selon les besoins, en fonction de la teneur en molybdène dans les scories, p. ex. après chaque étape de réduction.

On décrit ci-après un essai avec une scorie de composition donnée dans le tableau ci-dessous, reçue sous forme liquide à 1200°C :

| Elément / composé | unité | teneur |
|---|---|---|
| Cu (sous forme Cu₂O) | % | 1,5 |
| Fe (sous forme FeO / Fe₃O₄) | % | ∼45 |
| Mo (sous forme MoO₃) | % | 0,5 |
| S | % | 0,5 |
| SiO₂ | % | ∼26 |
| CaO | % | <1 |
| Al₂O₃ | % | 2 |
| C | % | 1 |
| ZnO | % | 5 |

Le traitement est effectué dans un four électrique à arc AC de 3 MW de puissance active, et de capacité totale 10 t:

Préalablement au chargement de la scorie liquide, on fond un pied de bain de cuivre de 3 t de composition suivante :

| Elément / composé | unité | teneur |
|---|---|---|
| Cu | % | 97,7 |
| Fe | % | ∼1 |
| Ni | % | 0,1 |
| S | % | 0,1 |
| Si | % | 0,5 |
| Zn | % | <0,1 |
| Mn | % | 0,5 |

Cette fusion est effectuée sous un débit d'azote de brassage en fond de sole de 150 I/min.

Après avoir porté ce bain de cuivre à 1450°C, on charge par une rigole latérale du four 5 t de scorie définie plus haut, sous brassage à 150 l/min ; en fin de chargement de la scorie, on ajoute 500 kg de chaux libre CaO.

Après obtention d'un bain métal+laitier homogène à 1450°C, on peut commencer la phase de réduction par injection d'anthracite fin par une lance immergée dans le laitier, à raison de 5 kg/min, pendant 15 minutes.

A la fin de cette injection, on abaisse le débit de brassage d'azote à ∼15 l/min pendant 15 minutes, pour favoriser la décantation des gouttes de métal du laitier.

Après 15 minutes de décantation sous ce brassage « doux », on prend des échantillons de métal et de laitier, qui donnent les résultats suivants :

| Teneur métal % | Elément / composé | Teneur laitier % |
|---|---|---|
| 97 | Cu (métal) / Cu₂O (laitier) | 0,3 |
| ∼2 | Fe (métal) / FeOₓ (laitier) | ∼60 |
| 0,7 | Mo (métal) / MoO₃ (laitier) | 0,08 |
| ∼0,1 | S | ∼0,5 |
| 0 | C | 0 |
| <0,1 | Si (métal) /SiO₂ (laitier) | 26 |
| | CaO | 11 |
| | Al₂O₃ | 2 |
| <0,1 | Zn (métal) / ZnO (laitier) | <0,1 |
| <0,02 | Mn (métal) / MnO (laitier) | 0,5 |

Les bilans matières effectués montrent que l'on a obtenu environ 3,1 t de cuivre enrichi en Mo, et environ 5 t de laitier. Les bilans élémentaires Cu et Mo donnent des rendements de récupération très proches de 90 % pour Cu et pour Mo.

Par ailleurs on observe que Si et Mn ont disparu du métal, ils ont d'évidence contribué à la réduction des oxydes de Cu et Mo (et du Fe passé dans le métal) ; de même le zinc - quasi-absent du métal et du laitier - est comme prévu récupéré sous forme d'oxyde dans les poussières. L'analyse des poussières récupérées sélectivement lors de la phase de process laitier donne près de 75 % ZnO, c.à.d. -60 % Zn.

En répétant ce process de traitement de scorie avec des lots successifs de scorie liquide, on continuerait à récupérer le cuivre de cette scorie, mais on se heurterait au problème de la miscibilité très limitée du Mo dans le Cu.

Il paraît donc préférable de séparer le Mo avant de passer à la charge suivante de scorie.

Dans ce but, on se sert de la propriété de l'oxyde de molybdène d'être très volatil (MoO₃ se vaporise à 1150°C), et on procède comme suit :
- on décrasse le mieux possible le laitier appauvri en Mo et Cu (de sorte à conserver environ 500 kg de laitier résiduel)
- on injecte de l'oxygène par une lance réfractaire immergée dans le bain métal, à un débit de 5 Nm³/min, sur des phases d'injection répétées de 2 min
- en prenant un échantillon métal à chaque étape.
- on récupère sélectivement dans un manche de filtre neuf la poussière dégagée lors de cette phase d'oxydation.

On constate que pour extraire le Mo il faut d'abord oxyder quasitotalement le fer du métal (jusqu'à 0,05 %Fe) ; la teneur Mo est réduite à 0,07 % après avoir injecté 30 Nm³ d'oxygène, soit 1,5 fois la quantité d'oxygène stoechiométrique pour l'oxydation de Fe et Mo. En analysant le laitier obtenu, on constate qu'il s'est enrichi en cuivre, à presque 10 %, ce qui explique en grande partie l'excédent d'oxygène passé.

On retrouve bien dans le manche de filtre spécialisé l'oxyde de Mo dégagé, avec une teneur Mo proche de 50 %, soit près de 80 % d'oxyde MoO₃.

Après cette phase d'extraction sélective de Mo, on poursuit les opérations en chargeant sur le bain métal obtenu, un nouveau lot de 5 t de scorie Cu-Mo, pour en récupérer Cu et Mo dans le bain de métal, et en séparer Mo dans une phase d'oxydation.

Cet essai illustre donc un procédé de récupération du Cu et du Mo d'une scorie, avec les rendements suivants :
- Cu est récupéré à 90 %, dans le bain de cuivre
- Mo est récupéré à 80 % environ, sous forme d'une poussière d'oxyde de MoO₃.

## Revendications

1. Procédé de récupération de métaux non-ferreux, notamment de cuivre, de nickel et de cobalt, à partir de résidus métallurgiques contenant ces métaux non-ferreux à un niveau d'oxydation supérieur ou égal à zéro, dans un four électrique à arc libre de type courant alternatif comprenant plusieurs électrodes, contenant un pied de bain de cuivre liquide, surmonté d'un laitier fluide comprenant au moins une phase de fusion-réduction A, comprenant les éléments suivants :
| | |
|---|---|
| A1 | chargement de résidus métallurgiques comprenant des métaux non-ferreux sur le pied de bain contenu dans le four électrique à arc libre, |
| A2 | fusion des résidus métallurgiques dans le laitier fluide ou à l'interface laitier-bain de cuivre, |
| A3 | réduction au moins des métaux non-ferreux au niveau d'oxydation zéro, et |
| A4 | brassage intense du pied de bain de cuivre par injection de gaz inerte, de préférence de l'azote et/ou de l'argon, de manière à éviter la formation de croûtes et à accélérer la réaction de réduction et à faire passer les métaux non-ferreux miscibles au cuivre dans le pied de bain de cuivre. |

2. Procédé selon la revendication 1, dans lequel la réduction A3 est réalisée en présence de carbone, de préférence d'anthracite.

3. Procédé selon la revendication 1 ou 2, dans lequel la réduction A3 est réalisée en présence de chaux vive CaO.

4. Procédé selon l'une quelconque des revendications précédentes, **caractérisé en ce que** le brassage intense du pied de bain A4 est réalisé par injection de gaz neutre à travers la sole du four électrique à arc à un débit compris entre 40 l/min.t et 150 l/min.t et de manière préférée à un débit entre 50 et 100 l/min.t.

5. Procédé selon l'une quelconque des revendications précédentes, **caractérisé en ce qu'**il comprend en outre une phase de décantation B subséquente à la au moins une phase fusion-réduction, comprenant un brassage modéré B1 favorisant la décantation des gouttelettes métalliques du laitier dans le pied de bain, suivi facultativement du retrait B2 d'au moins une partie du laitier du four.

6. Procédé selon la revendication 5, **caractérisé en ce que** le brassage modéré du pied de bain à l'étape B1 est réalisé par injection de gaz neutre à travers la sole du four électrique à arc à un débit compris entre 2 l/min.t et 20 l/min.t et de manière préférée à un débit entre 3 et 10 l/min.t.

7. Procédé selon l'une quelconque des revendications précédentes permettant en outre la récupération de métaux lourds volatils, en particulier le zinc et le plomb, **caractérisé en ce que** les composés de métaux non-ferreux lourds volatils entraînés dans les fumées pendant la phase A et, le cas échéant la phase B, sont récupérés au moyen de séparateurs.

8. Procédé selon l'une quelconque des revendications précédentes permettant en outre l'élimination du bain de cuivre du fer et de métaux plus oxydables que le fer éventuellement présents, **caractérisé en ce qu'**il comprend en outre au moins une phase d'oxydation C subséquente comprenant l'oxydation du fer et des métaux plus oxydables que le fer dans le bain de cuivre, notamment le silicium, le manganèse ou l'aluminium, par injection d'oxygène dans le bain de cuivre, en maintenant un brassage intense par le fond.

9. Procédé selon la revendication 8 permettant en outre la récupération de métaux non-ferreux volatils sous forme oxydée, en particulier l'oxyde de molybdène, **caractérisé en ce que** les composés de métaux non-ferreux volatils sous forme oxydée entraînés dans les fumées pendant la phase d'oxydation C sont récupérés au moyen de séparateurs.

10. Procédé selon la revendication 9 permettant de récupérer sélectivement un concentré d'oxyde de molybdène, **caractérisé en ce que** la phase d'oxydation C est réalisée après un retrait B2 d'au moins une partie du laitier et avec une quantité d'oxygène représentant 1,2 à 1,8 fois la quantité stoechiométrique d'oxydation du fer et du molybdène contenu dans le bain de cuivre, et **en ce que** l'oxyde de molybdène entraîné dans les fumées est récupéré au moyen de séparateurs.

11. Procédé selon l'une quelconque des revendications 8 à 10, dans lequel une partie du bain de cuivre est retirée du four et le laitier est recyclé dans une phase de fusion-réduction A subséquente.

12. Procédé selon l'une quelconque des revendications précédentes, **caractérisé en ce que** les températures de traitement se situent entre 1400 et 1500 °C.

13. Procédé selon l'une quelconque des revendications précédentes, **caractérisé en ce que** le chargement des résidus métallurgiques est effectué par gravité.

14. Procédé selon l'une quelconque des revendications précédentes, **caractérisé en ce que** le chargement de résidus métallurgiques est réalisé dans une région située entre les électrodes du four électrique à arc libre.
